# EUROPEAN PATENT APPLICATION

(11) **EP 4 744 887 A1**
(43) Date of publication of application: **20.05.2026**
(21) Application number: 26152765.9
(22) Date of filing: 19.01.2026
(51) Int. Cl.: B32B 7/12, B32B 27/08, B32B 27/18, B32B 27/22, B32B 27/30, B32B 27/32, C08L 23/10

(54) **COMPOSITE MATERIAL FOR PACKAGING, PACKAGING COMPRISING A COMPOSITE MATERIAL AND METHOD FOR MANUFACTURING A COMPOSITE MATERIAL FOR PACKAGING**

(71) Applicant: Constantia Tobepal S.L.U., 26007 Logrono (ES)
(72) Inventor: Dr. Martín, Roberto, 26007 Logroño (ES); Dr. Marcos, César, 09006 Burgos (ES); De Goñi, Álvaro, 26008 Logroño (ES); Leon, Ivan, 26006 Logroño (ES); Jiménez, Marta, 09007 Burgos (ES)
(74) Representative: Hannke Bittner & Partner mbB Regensburg

(57) **Abstract**

The present invention is directed to a composite material for packaging comprising a base layer (10) based on polyolefins, wherein the base layer (10) comprises a first surface (10a) and a second surface (10b), wherein the first surface (10a) and the second surface (10b) are opposite of each other, wherein the composite material comprises at least one first layer (12) based on polyolefins, wherein the first layer (12) is arranged at least indirectly on the first surface (10a) of the base layer (10), wherein the composite material comprises a second layer (14), wherein the second layer (14) is arranged between the base layer (10) and the first layer (12), wherein the composite material comprises a third layer (16) based on polyolefins, wherein the third layer (16) is arranged on the second surface (10b) of the base layer (10) at least indirectly. According to the present invention the composite material comprises a tear resistance in transversal direction (TD) which is ≤ 2.0 N and a tear resistance in machine direction (MD) which is ≤ 2.0 N, wherein the tear resistance is determined according to DIN EN ISO 6383-1.

## Description

The present invention is directed to a composite material for packaging, a packaging comprising a composite material and a method for manufacturing a composite material for packaging.

The present invention deals with a recyclable multilayer packaging material (composite material), a packaging made of such composite material and a method for producing the composite material and also the use of this composite material for packaging.

When it comes to packaging food and/or pharmaceutical products and other products such as home and personal care products, gels, toothpastes, suspensions, liquids, beverages, consumer goods, supplements and nutrients and so on, there is a need for packaging that is recyclable and should also be easy to tear open, allowing quick and easy access to the packaged product.

With regard to the recyclability of such packaging, in the past, a trend has been made toward using so-called mono material structures. Such mono material structures essentially comprise a single type of a polymer, such as polyolefins. In this case, the packaging material contains this type of polymer in a proportion of ≥ 70 wt.%, preferably ≥ 90 wt.% and particularly preferably ≥ 95 wt.%. The rest of the product comprises preferably only a low number, preferably only a single second material. Preferably, the product does not contain paper nor aluminum foil nor foamed thermoplastic non-polyolefin elastomers. Furthermore, pigments of black and other dark colors are preferably not present. Most preferably, a product is considered to be "recyclable" in the context of the present invention, if it fulfills all the requirements as outlined in the RecyClass guidelines (https://recyclass.eu/protocols-guidelines/design-for-recycling-guidelines/).

Such a recyclable multilayer packaging material is known from EP 3 957 475 A1 of the applicant. This recyclable multilayer packaging material comprises a plurality of polypropylene containing layers, wherein at least one of the polypropylene containing layers is bond to two neighboring layers by different adhesives. This multilayer packaging material comprises a CPP film as a sealing layer.

This known material has the drawback that the tear resistance is different in machine direction (MD) and in transverse direction (TD). This packaging material comprises a much higher tear resistance in TD compared to the tear resistance in MD, which results in poor tear resistance properties especially upon opening the packaging by hand. In particular, care has to be taken to orient the raw material when processing the film for packaging in order to obtain a final packaging which can be opened by hand in the desired direction. It is commonly known that CPP is slightly oriented in MD due to the casting process used for manufacturing the CPP film, what is the reason for the uneven tear resistances in MD and TD.

Based on the prior art, there is no known recyclable mono material composite material that exhibits similar or equivalent tear properties in both MD and TD.

Therefore, it is the object of the present invention to provide a composite material which is recyclable and easy to tear in MD and TD.

This object is solved by the subject matter of the independent claims. Preferred embodiments are subject of the dependent claims.

The composite material for packaging according to the invention comprises a base layer based on polyolefins, wherein the base layer comprises a first surface and a second surface, wherein the first surface and the second surface are opposite of each other. Furthermore, the composite material comprises at least one first layer based on polyolefins, wherein the first layer is arranged at least indirectly on the first surface of the base layer, wherein the composite material comprises a second layer, wherein the second layer is arranged between the base layer and the first layer. Furthermore, the composite material comprises a third layer based on polyolefins, wherein the third layer is arranged on the second surface of the base layer at least indirectly and preferred directly.

According to the invention the composite material comprises a tear resistance in transversal direction (TD) which is ≤ 2.0 N and a tear resistance in machine direction (MD) which is ≤ 2.0 N, wherein the tear resistance is determined according to DIN EN ISO 6383-1 (status 2016-05). Preferably the tear resistance (Trouser Tear) is determined using the Trouser Test according to DIN EN ISO 6383-1 (status 2016-05). For the determination of the tear resistance the Dynanometer Instron 3369 was used.

Preferably the composite material for packaging is a composite material for packaging food, pharmaceutical products, home and personal care products, gels, toothpastes, suspensions, liquids, beverages, consumer goods, supplements, nutrients and the like. Preferably the composite material according to the present invention is a composite material for packaging at least one of the goods mentioned above. Particularly preferred the composite material for packaging is a composite material for packaging food and/or pharmaceutical products and/or supplements.

In a preferred embodiment the composite material comprises a tear resistance in transversal direction (TD) which is ≤ 2.0 N, preferably ≤ 1.0 N and particularly preferred ≤ 0.5 N and particularly preferred ≤ 0.25 N. In a preferred embodiment the composite material comprises a tear resistance in machine direction (MD) which is ≤ 2.0 N, preferably ≤ 1.0 N and particularly preferred ≤ 0.5 N and particularly preferred ≤ 0.25 N.

In an advantageous embodiment the tear resistance in transversal direction (TD) differs from the tear resistance in machine direction (MD) by ≤ 35 %, preferably by ≤ 30 % and particularly preferred by ≤ 25 %.

This advantageous properties regarding the tear resistance in MD and TD can be achieved by using a third layer in form of an extruded layer of polyolefin-based resins instead of a CPP film (third layer) as a sealing layer which can be laminated by the use of connection layer (corresponding to a fourth layer described below) in form of an adhesive layer (e.g. solvent based, dry adhesive, etc.) or in form of an extrusion layer (e.g. extrusion lamination with a polypropylene-based resin as mentioned for example in EP 3 957 475 A1). In a preferred embodiment as discussed further below in detail an additional fourth layer based on polyolefins and preferably in form of an extruded layer of a polyolefin-based resin might be present. Such a fourth layer can be arranged between the base layer and the third layer and can be preferably applied by coextrusion in combination with the third layer. The details of the polyolefin-based resins used for the extruded and preferably coextruded third and fourth layer of the composite material will be discussed later in detail. The different possibilities to connect the CPP layer with the base layer (wet lamination, dry lamination, extrusion lamination) have a minor or even negligible effect on the mechanical properties and on the sealing properties, while the CPP sealing layer itself has a significant impact on the mechanical properties of the composite material and also on the sealing properties what will also be discussed further below.

As mentioned above the base layer comprises a first surface and a second surface which are lying opposite of each other. Preferably, the first surface of the base layer is the surface that faces away from the product to be packaged when it is in a packaged state. Preferably, the second surface of the base layer is the surface that faces the product to be packaged when it is in a packaged state.

In the context of this invention, the thickness or thickness direction of a film is understood to be the direction in which the film has the least expansion. In contrast, the longitudinal direction is understood to be a direction perpendicular to this, along which the film has the greatest expansion. The width direction of a film within the meaning of this invention is a direction perpendicular to the longitudinal direction and thickness direction. The longitudinal direction is usually understood to be the direction along which a film has the greatest expansion. This is usually the direction along which the film is transported during manufacture or processing. In the case of film sections, this direction can be identified, for example, by the sequence of certain processing steps, such as the direction in which a coating such as a primer, varnish, or paint is applied. The plane of the first surface and of the second surface of the base layer is each defined by the longitudinal direction and by the width direction.

In order to highlight the special features of the composite material according to the invention, the topics of orientation and stretching will be briefly discussed to clarify the terms used hereinafter, along with what is meant by the terms machine direction (MD) and transversal direction (TD).

The machine direction (MD) refers to the direction along the film sheet in which the film is mechanically drawn or rolled during production. This direction corresponds to the longitudinal direction of the film roll, here of the composite material. The transversal direction (TD) is the direction perpendicular to the machine direction, i.e., transverse to the film sheet. Plastic films can be typically manufactured by the cast film process or by the blown film process which can be laminated afterwards to obtain multilayer composite materials.

Cast films and blown films differ in their molecular orientation. In this context, the terms orientation and stretching are somewhat misleading, which is why the differences between the terms are discussed in more detail below, along with what is meant by the different types of plastic films, which is explained below using PP films as an example and applies analogously to films based on PE and/or other corresponding materials.

A CPP film (cast polypropylene) is produced by cast film extrusion. Cast film extrusion (also known as the flat die process) is a continuous process in which a thermoplastic (here PP) is melted and extruded through a flat die onto a cooling roller. On this roller, the plasticized PP is cooled and solidified again. The resulting film is pulled off the cooling roller and wound onto a roller for further processing. The melting process involves a temperature that is above the melting point of the thermoplastic material, and extrusion onto the cooling roller aligns the PP material in the machine direction (MD). The machine direction (MD) is therefore the longitudinal direction of the film.

In contrast, blown films are produced using the blown film extrusion process. First, the thermoplastic (PP) is extruded through a ring die and the resulting melt tube is blown into a film tube by a stream of air. This tube blowing process results in transverse orientation (TD) depending on the blow-up ratio. After tube blowing, the film is laid flat and, depending on the draw-off speed, the thermoplastic is also oriented in the machine direction (MD).

Molecular orientation, as mentioned above, must be distinguished from stretching. Stretching is an active process in which a film is typically stretched at a temperature below the melting point of the thermoplastic, e.g., by using suitable rollers. For further explanation of molecular orientation in blown films and the differences to a stretching process, reference is made here to AT 519 866 B1 and in particular to paragraph [0036] of this document. Stretching in one or two directions can be used to produce, for example, MOPP (monoaxially oriented PP) or BOPP (biaxially oriented PP). MDOPP is a PP film that has usually been stretched uniaxially or monoaxially in the MD direction. BOPP is a PP film that has been stretched in the MD and TD direction. MOPP is a type of uniaxially stretched PP. In other words, the main difference between CPP and (M)OPP or BOPP is that CPP is an unstretched or non-stretched film, while (M)OPP and BOPP are stretched films (stretched in one or two directions).

As mentioned above the composite material according to the present invention comprises several layers, namely at least a base layer, a first layer, a second layer, a third layer and in particular a fourth layer. Further layers might be present such as a print layer and dependent on the arrangement of such a print layer an overprint layer might be applied. The different layers are described separately in detail afterwards.

In a preferred embodiment the composite material is a mono material. Preferably the composite material is based on a polyolefin and consists mainly of this polyolefin. In a preferred embodiment the polyolefin is polypropylene. In an advantageous embodiment the composite material contains the polyolefin and preferably polypropylene with a content, which is ≥ 75 wt.%, preferably ≥ 90 wt.% and particularly preferred ≥ 95 wt.%. Preferably a content of the polyolefin and preferably a content of polypropylene in this range renders the composite material recyclable in terms of the RecyClass guidelines (https://recyclass.eu/protocols-guidelines/design-for-recycling-guidelines/).

Furthermore, the above-mentioned guidelines allow barrier layers and coatings as long as they do not exceed a maximum of 5 % of the total packaging structure weight. Suitable materials included in such a barrier layer are AlOx, SiOx, EVOH, PVOH and/or Acrylic as well as laminated and printed metallized layers. Also, some adhesives are allowed by the above-mentioned guidelines. The allowed materials include polyurethane, acrylic or natural rubber latex adhesives, as well as non-PE or non-PP based tie-layers, unless they do not exceed a maximum of 5 % by weight of the total packaging structure.

In a preferred embodiment the base layer and/or the first layer comprise a polyolefin and in particular are based on a polyolefin or consist of that polyolefin. In a preferred embodiment the base layer and/or the first layer are based on polypropylene (PP) and preferably consist of polypropylene. Preferably the base layer and/or the first layer are a plastic film and preferably a plastic film based on polypropylene.

In an advantageous embodiment the base layer and/or the first layer is an unstretched polypropylene film, a monoaxially stretched polypropylene film or a biaxially stretched polypropylene film. In an advantageous embodiment the base layer and/or the first layer is a biaxially oriented polypropylene film (BOPP film).

In a preferred embodiment, the base layer and/or the first layer is a plastic film based on PP, in particular based on homo-PP (polypropylene homopolymer), hetero-raco-PP (heterophasic random copolymer propylene), raco-PP (random copolymer polypropylene), heterophasic PP, or the like. In a preferred embodiment, the base layer and/or the first layer is a plastic film and preferably a plastic film made of biaxially oriented polypropylene (BOPP), (mono-)oriented polypropylene (OPP), in particular monoaxially oriented polypropylene (MOPP) and in particular machine direction oriented polypropylene (MDOPP), non-oriented polypropylene (PP) or cast polypropylene (CPP). The film comprising non-oriented polypropylene can be a blown film or a cast film. As mentioned above these two films differ in their molecular orientation due to the respective manufacturing process.

Preferably, the base layer and/or the first layer is a plastic film made of non-oriented polypropylene (PP). Preferably, the plastic film made of non-oriented polypropylene (PP) has a thickness of ≥ 10 µm, preferably ≥ 15 µm and particularly preferably ≥ 20 µm. Preferably, the plastic film made of non-oriented polypropylene (PP) has a thickness of 5 45 µm, preferably ≤ 40 µm and particularly preferably ≤ 30 µm.

Preferably, the base layer and/or the first layer is a plastic film made of (mono-)oriented polypropylene (OPP) and, in particular, of polypropylene monoaxially oriented in the machine direction (MDOPP). Preferably, the plastic film made of (mono-)oriented polypropylene (OPP) and, in particular, of monoaxially oriented polypropylene (MDOPP) in the machine direction has a thickness of ≥ 10 µm, preferably ≥ 15 µm and particularly preferably ≥ 20 µm.

Preferably, the plastic film made of (mono-)oriented polypropylene (OPP) and, in particular, of machine direction monoaxially oriented polypropylene (MDOPP) has a thickness of ≤ 45 µm, preferably ≤ 40 µm and particularly preferred ≤ 30 µm.

Preferably, the base layer and/or the first layer is a plastic film made of biaxially oriented polypropylene (BOPP). Preferably, the plastic film made of biaxially oriented polypropylene (BOPP) has a thickness of ≥ 10 µm, preferably ≥ 15 µm and particularly preferably ≥ 20 µm. Preferably, the plastic film made of biaxially oriented polypropylene (BOPP) has a thickness of 45 µm, preferably ≤ 40 µm and particularly preferred ≤ 30 µm.

Preferably, the base layer and/or the first layer is a cavitated polypropylene film. Such a cavitated polypropylene film is a polypropylene film which has a density below the usual density of polypropylene film. Such cavitated polypropylene can be achieved by using cavitating agents such as fillers, additives or foreign phases in the polymer matrix. Preferably, the plastic film in form of a cavitated polypropylene film has a thickness of ≥ 10 µm, preferably ≥ 15 µm, and particularly preferably ≥ 20 µm. Preferably, the plastic film in form of a cavitated polypropylene film has a thickness of ≤ 45 µm, preferably ≤ 40 µm and particularly ≤ 30 µm.

In a preferred embodiment the base layer and/or the first layer can be a single-layer film, a multilayer film, in particular a laminate or a coated film. Such a coating might be a barrier layer. In a preferred embodiment the base layer comprises barrier properties and preferably comprises therefore at least one barrier layer. Preferably the at least one barrier layer is a metal layer, preferably a layer of aluminum or a layer of a metal oxide, preferably a layer of aluminum oxide or a layer of a semimetal oxide, preferably a layer of silicon oxide or a combination thereof.

In an advantageous embodiment the base layer comprises at least one barrier layer, wherein the at least one barrier layer is a layer of a metal, preferably aluminum, a layer of a metal oxide, preferably aluminum oxide, a layer of a semimetal oxide, preferably silicon oxide or a layer comprising polyvinyl alcohol (PVOH) or ethylene vinyl alcohol (EVOH).

Preferably the base layer comprises one barrier layer and particular preferred more than one barrier layer. In a preferred embodiment the base layer comprises a barrier layer in form of an aluminum layer, wherein the barrier layer is arranged on the first surface of the base layer. It would be also thinkable to arrange a barrier layer on the second surface of the base layer or to arrange a barrier layer on both sides of the base layer. Preferably this is dependent on products to be packed and depending on the direction of diffusion which should be hindered by the respective barrier layer. In a preferred embodiment the base layer comprises more than one barrier layer which are arranged on top of each other on one side of the base layer. For example, a first barrier layer in form of an EVOH layer is present which is further coated with a layer of Aluminum as a second barrier layer. In another example a first barrier layer is formed by an EVOH layer which is subsequently coated with a resin of another barrier layer (e.g. extrusion coated) or laminated with another barrier layer via adhesive lamination.

In a preferred embodiment the base layer is a multilayer film, wherein this multilayer film comprises a layer of polypropylene which is coextruded with a layer comprising ethylene vinyl alcohol (EVOH). Preferably one surface of this multilayer film is formed by the EVOH layer (so called EVOH skin). Preferably the EVOH layer is a barrier layer, which acts as a barrier against oxygen in particular. Preferably this multilayer film comprising a layer of polypropylene and a layer of EVOH is monoaxially or biaxially stretched. Preferably such a biaxially stretched multilayer film can be used as a BOPP film for the base layer. Preferably the base layer comprises the EVOH layer with a thickness which is ≥ 1 µm, preferably ≥ 2 µm and particularly preferably ≥ 4 µm and/or ≤ 10 µm, preferably ≤ 8 µm and particularly preferred 5 6 µm.

In a preferred embodiment the base layer in form of such a multilayer film (polypropylene layer in combination with EVOH layer) comprises a further barrier layer, wherein the further barrier is a metal layer, in particular a layer of aluminum. In a preferred embodiment this further barrier layer is arranged on a surface of the EVOH layer facing away from the propylene layer. With other words in this embodiment the base layer is a coated multilayer film, wherein the multilayer film comprises at least a layer of polypropylene and a layer of EVOH, wherein the multilayer film is coated on the side of the EVOH layer with the further barrier layer e.g. with a layer of aluminum. In a preferred embodiment the multilayer film is stretched uniaxially or biaxially prior the coating with the metal.

In a preferred embodiment the base layer is a BOPP film and preferably a metallized BOPP film (metBOPP). Preferably the base layer is a BOPP film which is vapor-coated with aluminum. Hereby the aluminum layer represents the barrier layer. Preferably the BOPP film is a multilayer film comprising a skin layer of EVOH as mentioned above which is in particular vapor-coated with aluminum. Preferably the base layer comprises a barrier layer in form of an aluminum layer with a thickness, which is ≥ 10 nm, preferably ≥ 30 nm and particularly preferred ≥ 50 nm and/or ≤ 100 nm, preferred ≤ 80 nm and particularly preferred ≤ 60 nm. Preferably the aluminum layer is arranged on the first surface of the base layer facing away from the products to be packed in a packed state. It is also possible to use other polypropylene films which comprise such a layer of aluminum.

Preferably the base layer comprises a barrier layer in form of a layer of aluminum oxide (AlOx), wherein the base layer comprises the aluminum oxide layer (barrier layer) with a thickness, which is ≥ 10 nm, preferably ≥ 20 nm and particularly preferred ≥ 30 nm and/or 5 60 nm, preferred ≤ 50 nm and particularly preferred ≤ 40 nm. Preferably the aluminum oxide layer is arranged on the first surface of the base layer facing away from the products to be packed in a packed state.

Preferably the base layer comprises a barrier layer in form of a layer of silicon oxide (SiOx), wherein the base layer comprises the silicon oxide layer (barrier layer) with a thickness, which is ≥ 20 nm, preferably ≥ 40 nm and particularly preferred ≥ 50 nm and/or ≤ 100 nm, preferred ≤ 80 nm and particularly preferred ≤ 60 nm. Preferably the silicon oxide layer is arranged on the first surface of the base layer facing away from the products to be packed in a packed state.

Preferably the first layer is also a BOPP film. The use of a BOPP film and especially the use of two BOPP films (base layer and first layer in form of a BOPP film) offers the advantage that the strength and clarity of the respective layer is increased with respect to not oriented or only unidirectional stretched polypropylene which is also reflected in the final composite material (laminate). In comparison to not oriented or unidirectional stretched polypropylene BOPP shows a higher mechanical strength and form stability especially in both MD and TD.

Preferably the base layer and the first layer are connected by the second layer. In an advantageous embodiment the second layer is a lamination adhesive layer, wherein the lamination adhesive layer is selected from a group of adhesives used for wet lamination, dry lamination, extrusion lamination or combinations thereof.

In a preferred embodiment the second layer is arranged on the first surface of the base layer at least indirectly and preferred directly. This is preferably dependent on the specific configuration of the base layer and of the second layer and especially on the specific configuration of a barrier layer arranged at the first surface of the base layer. It might be possible that a tie layer has to be arranged on the barrier layer prior to arrangement of the second layer especially in the case of the second layer in form of an extrusion layer. For example, using an extrusion lamination process for the connection of the base layer and the first layer while the base layer comprises a layer of aluminum facing the first layer it is necessary to apply a tie layer. Such a tie layer could be a layer of maleic anhydride grafted polypropylene resin or a resin which is compatible with the barrier layer, like PE, LDPE, PE copolymers, PP copolymers and so on.

In a preferred embodiment the second layer is an adhesive layer, while the adhesive is selected from a group of adhesives comprising polyurethane-based adhesives, acrylic-based adhesives, natural rubber latex adhesives, as well as non-PE or non-PP based tie-layers, water-based adhesives and solvent-based adhesives. Preferably the composite material comprises the second layer in form of a lamination adhesive with an application weight, which is ≥ 0.5 g/m², preferably ≥ 1.0 g/m² and particularly preferred ≥ 2.0 g/m² and/or ≤ 5.0 g/m², preferably ≤ 4.0 g/m² and particularly preferred ≤ 3.0 g/m². These indications refer to dry weight of the respective adhesive (without additional solvents) and refer to the use of lamination adhesive which can be used for wet lamination or dry lamination. On the other hand, when a lamination adhesive is used for an extrusion lamination process higher applications weights of the lamination adhesive are used. In this case the composite material comprises preferably the second layer in form of a lamination adhesive (for extrusion lamination) with an application weight, which is ≥ 5.0 g/m², preferably ≥ 8.0 g/m² and particularly preferred ≥ 11.0 g/m² and/or 5 30.0 g/m², preferably ≤ 20.0 g/m² and particularly preferred ≤ 15.0 g/m².

In a preferred embodiment the composite material comprises a print layer, wherein the print layer is arranged on a surface of the first layer facing away from the base layer or is arranged on a surface of the first layer facing towards the base layer. The first mentioned option is to arrange the print layer in the form of a surface print on top of the composite material, while the second option is to arrange the print layer in the form of a counter print (reverse print).

Preferably printing colors or inks are used which are known from the prior art, e.g. nitrocellulose-based inks, polyurethane-based inks, polyvinylbutyral-based, acrylate-based inks or inks based on cellulose derivates such as celluloseacetatbutyrate (CAB) or celluloseace-tatphthalate (CAP). In a preferred embodiment when using the print layer in form of a surface print the composite material comprises an overprint layer in particular for protection of the print layer (e.g. from scratching, fading, etc.). For this purpose, commonly known overprint lacquers can be used. For example, one component (1K) or two component (2K) lacquers systems on polyurethane-basis, acrylate-basis, polyvinylbutryral-basis, nitrocellulose-basis and the like can be applied with typical application weights.

As mentioned above the composite material according to the invention comprises a third layer and in another preferred embodiment an additional fourth layer. While it is known from the prior art to use a CPP layer as a sealing layer (third layer) which can bound to the base layer by adhesive lamination or by extrusion lamination the present invention suggests using a sealing layer (third layer) in form of an extrusion layer of at least one resin based on polyolefins. Such a sealing layer (third layer) can be used in particular in a preferred embodiment as mentioned below in combination with a fourth layer in form of another extrusion layer of a polyolefin-based resin, which can be applied together to the base layer (application by coextrusion).

In an advantageous embodiment the third layer is a sealing layer, wherein the third layer is an extrusion layer of a mixture of at least two polyolefin-based resins. In a preferred embodiment the third layer is an extrusion layer of a mixture of at least two polyolefin-based resins and preferably a mixture of at least three polyolefin-based resins. In particular the polyolefin-based resins are chosen in dependency on their compatibility with each other and in dependency on the desired properties of the resulting composite material especially upon the sealing properties. For the third layer resins based on polypropylene, based on polyethylene, based on mixtures of polyethylene and polypropylene e.g. copolymers of ethylene and propylene and the like could be preferably used.

In a preferred embodiment the third layer contains a first polyolefin-based resin. Preferably the first polyolefin-based resin is a polypropylene-based resin and preferably a resin based on a polypropylene-copolymer and particularly preferred based on an ethylene-propylene-copolymer.

In a preferred embodiment the first polyolefin-based resin in form of an ethylene-propylene-copolymer comprises an ethylene content which is ≥ 5 wt.%, preferably ≥ 9 wt.% and particularly preferably ≥ 13 wt.% and/or ≤ 20 wt.%, preferably ≤ 17 wt.% and particularly preferred ≤ 15 wt.%.

The first polyolefin-based resin comprises a melt flow index (at 230 °C/2.16 kg) which is ≥ 6 g/10 min, preferably ≥ 10 g/10 min, preferably ≥ 15 g/10 min and particularly preferably ≥ 20 g/10 min and/or ≤ 30 g/10 min, preferably ≤ 28 g/10 min and particularly preferred ≤ 26 g/10 min, wherein the melt flow index is determined according to ASTM D1238-23a (last updated 6^{th} December 2023).

The first polyolefin-based resin comprises a tensile strength (break, compression molded) which is ≥ 5 MPa, preferably ≥ 10 MPa, preferably ≥ 15 MPa and particularly preferred ≥ 20 MPa and/or ≤ 27 MPa, preferably ≤ 25 MPa and particularly preferably ≤ 23 MPa, wherein the tensile strength is determined according to ASTM D638-22 (last updated 21^{st} July 2022). Preferably the at least one first polyolefin-based resin comprises a tensile elongation at break (50 mm/min) which is ≥ 800 %, preferably ≥ 820 %and particularly preferred ≥ 850 %, wherein the tensile elongation at break is determined according to ASTM D638-22 (last updated 21^{st} July 2022).

In a preferred embodiment the first polyolefin-based resin is a resin based on a polypropylene-copolymer and preferably based on an ethylene-propylene-copolymer. In a preferred embodiment the first polyolefin-based resin preferably in form of an ethylene-propylene-copolymer comprises a vicat softening temperature, which is which is ≥ 40 °C, preferably ≥ 45 °C and particularly preferred ≥ 50 °C and/or ≤ 80 °C, preferably ≤ 70 °C and particularly preferred ≤ 60 °C, wherein the vicat softening temperature is determined according to ASTM 1525-25 (last updated 4th March 2025).

In a preferred embodiment the first polyolefin-based resin preferably in form of an ethylene-propylene-copolymer comprises a melting temperature Tₘ, which is ≥ 60 °C, preferably ≥ 70 °C and particularly preferred ≥ 80 °C and/or ≤ 100 °C, preferably ≤ 90 °C and particularly preferred ≤ 85 °C, wherein the melting temperature is determined via DSC according to DIN EN ISO 11357-series, especially according to DIN EN ISO 11357-3 (status 2018:07) using a TA instruments DSC25-00164 with a heating rate of 10K/min and a temperature range from - 40 °C to 400 °C.

In a preferred embodiment the first polyolefin-based resin preferably in form of an ethylene-propylene-copolymer comprises a glass transition temperature T_{g} which is ≥ -30 °C, preferably ≥ -26 °C and particularly preferred ≥ -23°C and/or ≤ -14 °C, preferably ≤ -17 °C and particularly preferred ≤ -20 °C, wherein the glass transition temperature is determined via DSC according to ISO 11357-2 (status 2020-08), wherein a 10 mg sample in a aluminum crucible is investigated with a heating rate of 10 K/min in the temperature range von -100 °C to 100 °C.

Preferably this first polyolefin-based resin can be also used for the fourth layer as discussed further below. Preferably the first polyolefin-based resin (ethylene-propylene-copolymer) is the main component of the third layer.

In a preferred embodiment the third layer contains the first polyolefin-based resin and preferably in form of an ethylene-propylene-copolymer with a content, which is ≥ 80 wt.%, preferably ≥ 85 wt.%, preferably ≥ 90 wt.% and particularly preferred ≥ 95 wt.% and/or 5 99 wt.%, preferably ≤ 98 wt.%, preferably ≤ 97 wt.% and particular preferred ≤ 96 wt.%.

In a preferred embodiment the third layer comprises a second polyolefin-based resin, wherein the second polyolefin-based resin is an anti-block agent containing polypropylene-based resin and preferably an anti-block agent containing polypropylene homopolymer. Preferably the anti-block agent is selected from a group of anti-block agents comprising talc, kaolin, silica, calcium carbonate and the like. In a preferred embodiment the anti-block agent is silica and particularly preferred synthetic silica.

Preferably the second polyolefin-based resin in form of a polypropylene homopolymer including an anti-block agent comprises a melt flow index (at 230 °C/2.16 kg) which is ≥ 5.0 g/10 min, preferably ≥ 6.0 g/10 min and particularly preferably ≥ 7.0 g/10 min and/or ≤ 10.0 g/10 min, preferably ≤ 9.0 g/10 min and particularly preferred ≤ 8.0 g/10 min, wherein the melt flow index is determined according to ASTM D1238-23a (updated 6^{th} December 2023).

Preferably the second polyolefin-based resin contains the anti-block agent with a content which is ≥ 1 wt.%, preferably, ≥ 2 wt.%, preferably ≥ 3 wt.% and particularly preferred ≥ 4 wt.% and/or 10 ≤ wt.% preferably, ≤ 8 wt.%, preferably ≤ 6 wt.% and particularly preferred ≤ 5 wt.%.

In a preferred embodiment the third layer contains the second polyolefin-based resin and preferably the anti-block agent containing polypropylene homopolymer with a content, which is ≥ 1 wt.%, preferably ≥ 2 wt.%, preferably ≥ 3 wt.% and particularly preferred ≥ 4 wt.% and/or 5 10 wt.%, preferably ≤ 8 wt.%, preferably ≤ 6 wt.% and particular preferred ≤ 5 wt.%.

In a preferred embodiment the third layer comprises a third polyolefin-based resin, wherein the third polyolefin-based resin is a slip agent containing polyethylene-based resin or a slip agent containing polypropylene resin, preferably a slip agent containing polypropylene homopolymer. Preferably the slip-agent is chosen from a group of slip-agents comprising erucamide, oleamide, silicones and the like. Preferably the third polyolefin-based resin preferably in form of a slip agent containing polyethylene-based resin or in form of a slip agent containing polypropylene-based resin, in particular in form of a slip agent containing polypropylene homopolymer comprises the slip-agent with a content which is ≥ 1 wt.%, preferably, ≥ 2 wt.%, preferably ≥ 3 wt.% and particularly preferred ≥ 4 wt.% and/or 8 ≤ wt.% preferably, ≤ 7 wt.%, preferably ≤ 6 wt.% and particularly preferred ≤ 5 wt.%.

In a preferred embodiment the third layer contains the third polyolefin-based resin and preferably the slip agent containing polyethylene-based resin or the slip agent containing polypropylene-based resin with a content, which is ≥ 1 wt.%, preferably ≥ 2 wt.%, preferably ≥ 3 wt.% and particularly preferred ≥ 4 wt.% and/or ≤ 10 wt.%, preferably ≤ 8 wt.%, preferably ≤ 6 wt.% and particular preferred ≤ 5 wt.%.

Although both a slip agent containing polyethylene-based resin and a slip agent containing polypropylene resin, preferably a slip agent containing polypropylene homopolymer can be used, the use of the slip agent containing polypropylene resin, preferably the slip agent containing polypropylene homopolymer is preferred due to the sake of a recyclability of the composite material according to the present invention.

In a preferred embodiment, in which the composite material comprises no fourth layer (in contrast to the embodiment described further below), the composite material comprises the third layer in form of an extrusion layer of a mixture of at least two polyolefin-based resins and preferably in form of an extrusion layer of a mixture of at least three polyolefin-based resins with an application weight, which is ≥ 1 g/m², preferably ≥ 5 g/m², preferably ≥ 10 g/m², preferably ≥ 20 g/m² and particularly preferred ≥ 30 g/m² and/or 5 80 g/m², preferably ≤ 70 g/m², preferably ≤ 60 g/m², preferably ≤ 50 g/m² and particularly preferred ≤ 40 g/m².

In an advantageous embodiment the third layer comprises at least a first polyolefin-based resin, a second polyolefin-based resin and third polyolefin-based resin, wherein the first polyolefin-based resin is an ethylene-propylene-copolymer, wherein the second polyolefin-based resin is an anti-block agent containing polypropylene-based resin, wherein the third polyolefin-based resin is a slip agent containing polyethylene-based resin or a slip agent containing polypropylene-based resin.

The use of such polyolefin-based resins offers the advantage that the composite material according to the present invention is compliant with the Pharmacopoeia of the European Union. Preferably the third layer and/or fourth layer (polypropylene extrusion layers) meet the compositional requirements of the European Pharmacopoeia monographs 3.1.3 "polyolefins".

In a preferred embodiment the third layer is arranged on the second surface of the base layer at least indirectly in form of an extruded layer.

In an advantageous embodiment the composite material comprises a fourth layer, wherein the fourth layer is arranged between the base layer and the third layer, wherein the fourth layer is an extrusion layer of at least one fourth polyolefin-based resin. In an advantageous embodiment the at least one fourth polyolefin-based resin is a polypropylene-based resin and preferably a resin based on a polypropylene-copolymer and particularly preferred based on an ethylene-propylene-copolymer. The term at least one fourth polyolefin-based resin suggests that either one single type of polyolefin-based resin could be used but mixtures of more than one polyolefin-based resin can be used. But the use of a single polyolefin-based resin is preferred.

As mentioned above the first polyolefin-based resin could be used as the fourth polyolefin-based resin for the fourth layer. Such a resin will be described in the following as a LT-resin (lower melting temperature) due to the lower melting point of the polyolefin-based resin. Beside that also another polyolefin-based resin can be used, which differs in some physical properties from the first polyolefin-based resin, which is described in the following by the term HT-resin (high temperature) due to its higher melting temperature. For a better overview the physical data are also given for the LT-resin, which also have been discussed previously with reference to the first polyolefin-based resin. The following physical properties are corresponding to both the fourth polyolefin-based resin in form of the LT-resin (related to the first polyolefin-based resin) and in the form of the HT-resin.

In a preferred embodiment the at least one fourth polyolefin-based resin in form of an ethylene-propylene-copolymer comprises an ethylene content which is ≥ 5 wt.%, preferably ≥ 9 wt.% and particularly preferably ≥ 13 wt.% and/or ≤ 20 wt.%, preferably ≤ 17 wt.% and particularly preferred ≤ 15 wt.%.

The at least one fourth polyolefin-based resin comprises a melt flow index (at 230 °C/2.16 kg) which is ≥ 6 g/10 min, preferably ≥ 10 g/10 min, preferably ≥ 15 g/10 min and particularly preferably ≥ 20 g/10 min and/or ≤ 30 g/10 min, preferably ≤ 28 g/10 min and particularly preferred ≤ 26 g/10 min, wherein the melt flow index is determined according to ASTM D1238-23a (last updated 6th December 2023).

The at least one fourth polyolefin-based resin comprises a tensile strength (break, compression molded) which is ≥ 5 MPa, preferably ≥ 10 MPa, preferably ≥ 15 MPa and particularly preferred ≥ 20 MPa and/or ≤ 27 MPa, preferably ≤ 25 MPa and particularly preferably ≤ 23 MPa, wherein the tensile strength is determined according to ASTM D638-22 (last updated 21^{st} July 2022). Preferably the at least one fourth polyolefin-based resin comprises a tensile elongation at break (50 mm/min) which is ≥ 800 %, preferably ≥ 820 %and particularly preferred ≥ 850 %, wherein the tensile elongation at break is determined according to ASTM D638-22 (last updated 21^{st} July 2022).

In her investigations, the applicant has found that polyolefin-based resins can be used for the fourth layer in the form of an extrusion layer, which show significant differences in terms of a melting temperature and vicat softening temperature as mentioned above. The applicant also found that the use of resins with such different properties regarding the temperatures can significantly influence the tear properties of the resulting composite material. For example the use of a polyolefin-based resin with lower melting temperature (LT-resin) for the fourth layer leads to a composite material which shows the herein described tear resistances (in TD and MD ≤ 2.0 N) independently from a test speed, while in the case that a polyolefin-based resin with a higher melting temperature is used the herein described tear resistances can be only observed under fast opening speed. This last finding opens the field for the application of the composite material according to an embodiment of the present invention for child safe packaging of e.g. pharmaceutical products.

While the previously described physical properties are related to both types of polyolefin-based resins the respective data regarding a melting temperature, a vicat softening temperature and a glass transition temperature are described separately. For a better overview the terms LT-resin (low temperature polyolefin-based resin) and HT-resin (high temperature polyolefin-based resin) are used hereinafter.

In a preferred embodiment (LT-resin) the at least one fourth polyolefin-based resin is a resin based on a polypropylene-copolymer and preferably based on an ethylene-propylene-copolymer. In a preferred embodiment (LT-resin) the at least one fourth polyolefin-based resin preferably in form of an ethylene-propylene-copolymer comprises a vicat softening temperature, which is ≥ 40 °C, preferably ≥ 45 °C and particularly preferred ≥ 50 °C and/or ≤ 80 °C, preferably ≤ 70 °C and particularly preferred ≤ 60 °C, wherein the vicat softening temperature is determined according to ASTM 1525-25 (last updated 4th March 2025).

In a preferred embodiment (HT-resin) the at least one fourth polyolefin-based resin is a polypropylene-based resin. In a preferred embodiment (HT-resin) the at least one fourth polyolefin-based resin preferably in form of a polypropylene-based resin comprises a vicat softening temperature, which is ≥ 120 °C, preferably ≥ 125 °C and particularly preferred ≥ 130 °C and/or ≤ 150 °C, preferably ≤ 140 °C and particularly preferred ≤ 135 °C, wherein the vicat softening temperature is determined according to ASTM 1525-25 (last updated 4th March 2025).

In a preferred embodiment (LT-resin) the at least one fourth polyolefin-based resin preferably in form of an ethylene-propylene-copolymer comprises a melting temperature Tₘ, which is ≥ 60 °C, preferably ≥ 70 °C and particularly preferred ≥ 80 °C and/or ≤ 100 °C, preferably ≤ 90 °C and particularly preferred ≤ 85 °C, wherein the melting temperature is determined via DSC according to DIN EN ISO 11357-series, especially according to DIN EN ISO 11357-3 (status 2018:07) using a TA instruments DSC25-00164 with a heating rate of 10K/min and a temperature range from -40 °C to 400 °C.

In a preferred embodiment (HT-resin) the at least one fourth polyolefin-based resin preferably in form of a polypropylene-based resin comprises a melting temperature Tₘ, which is ≥ 150 °C, preferably ≥ 155 °C and particularly preferred ≥ 160 °C and/or ≤ 180 °C, preferably ≤ 170 °C and particularly preferred ≤ 165 °C, wherein the melting temperature is determined via DSC according to ISO 11357-series, especially according to DIN EN ISO 11357-3 (status 2018:07) using a TA instruments DSC25-00164 with a heating rate of 10K/min and a temperature range from -40 °C to 400 °C.

In a preferred embodiment (LT-resin) the at least one fourth polypropylene-based resin preferably in form of an ethylene-propylene-copolymer comprises a glass transition temperature T_{g} which is ≥ -30 °C, preferably ≥ -26 °C and particularly preferred ≥ -23°C and/or ≤ -14 °C, preferably ≤ -17 °C and particularly preferred ≤ -20 °C, wherein the glass transition temperature is determined via DSC according to ISO 11357-2 (status 2020-08), wherein a 10 mg sample in a aluminum crucible is investigated with a heating rate of 10 K/min in the temperature range von -100 °C to 100 °C.

In a preferred embodiment the composite material comprises the fourth layer in form of an extrusion layer of the at least one fourth polypropylene-based resin with an application weight, which is ≥ 1 g/m², preferably ≥ 5 g/m², preferably ≥ 10 g/m², preferably ≥ 20 g/m² and particularly preferred ≥ 30 g/m² and/or ≤ 80 g/m², preferably ≤ 70 g/m², preferably ≤ 60 g/m², preferably ≤ 50 g/m² and particularly preferred ≤ 40 g/m².

In this preferred embodiment, wherein the composite material comprises the fourth layer and the third layer, the composite material comprises the third layer in form of an extrusion layer of a mixture of at least two polyolefin-based resins and preferably in form of an extrusion layer of a mixture of at least three polyolefin-based resins with an application weight, which is ≥ 1 g/m², preferably ≥ 3 g/m², preferably ≥ 6 g/m², preferably ≥ 8 g/m² and particularly preferred ≥ 10 g/m² and/or ≤ 30 g/m², preferably ≤ 25 g/m², preferably ≤ 20 g/m², and particularly preferred ≤ 15 g/m².

Preferably the third layer and the fourth layer are arranged on the second surface of the base layer at least indirectly in form of an extruded layers and preferably in form of coextruded layers. It would be possible that the third layer and the fourth layer are arranged by extrusion coating in two independent subsequent steps, but by application of the third and fourth layer by coextrusion renders the manufacturing simpler.

The use of the mixture of polyolefin-based resins as a sealing layer (third layer) and also preferably in combination with the use of the at least one fourth polyolefin-based resin as a fourth layer offers a set of advantages in comparison to an analogous structure using a CPP layer as a sealing layer (as it is known form the prior art). Compared to a cast film (CPP), such an extrusion layer offers the advantage that there is no significant preferred direction in terms of polymer orientation, which results in more similar properties in terms of tear resistance in both TD and MD.

In a preferred embodiment the composite material comprises a Young Modulus in MD which is ≥ 500 MPa, preferably ≥ 800 MPa and particularly preferred ≥ 1100 MPa and/or ≤ 2000 MPa, preferably ≤ 1700 MPa and particularly preferred ≤ 1400 MPa. In a preferred embodiment the composite material comprises a Young Modulus in TD which is ≥ 800 MPa, preferably ≥ 900 MPa and particularly preferred ≥ 1000 MPa and/or ≤ 1500 MPa, preferably ≤ 1300 MPa and particularly preferred ≤ 1100 MPa.

In a preferred embodiment the composite material comprises a maximum load in MD which is ≥ 50 N, preferably ≥ 70 N and particularly preferred ≥ 90 N and/or ≤ 150 N, preferably ≤ 130 N and particularly preferred ≤ 110 N. In a preferred embodiment the composite material comprises a maximum load in TD which is ≥ 80 N, preferably ≥ 100 N and particularly preferred ≥ 120 N and/or ≤ 170 N, preferably ≤ 150 N and particularly preferred ≤ 130 N.

In a preferred embodiment the composite material comprises an elongation at break in MD which is ≥ 50 %, preferably ≥ 70 % and particularly preferred ≥ 90 % and/or ≤ 150 %, preferably ≤ 130 % and particularly preferred ≤ 110 %. In a preferred embodiment the composite material comprises an elongation at break in TD which is ≥ 30 %, preferably ≥ 45 % and particularly preferred ≥ 60 % and/or ≤ 100 %, preferably ≤ 85 % and particularly preferred ≤ 70 %. The Young Modulus, the elongation at break and the maximum load at break are determined according to ASTM D882-18 (last updated 15^{th} August 2018) using a dynamometer Instron 3369.

The composite material according to a preferred embodiment comprises a puncture resistance from inside to outside (direction from fourth layer to first layer) which is ≥ 5 N, preferably ≥ 8 N and particularly preferred ≥ 11 N and/or ≤ 20 N, preferably ≤ 17 N and particularly preferred ≤ 14 N. The composite material according to a preferred embodiment comprises a puncture resistance from outside to inside (direction from first layer to fourth layer) which is ≥ 5 N, preferably ≥ 8 N and particularly preferred ≥ 11 N and/or ≤ 20 N, preferably ≤ 17 N and particularly preferred ≤ 14 N. The puncture resistance is determined according to ASTM F1306-21 (last updated 22^{nd} October 2025) with a dynamometer of Hounsfield H5KS.

In a preferred embodiment in which the base layer comprises at least one barrier layer, the composite material has an oxygen permeability (OTR, 23 °C/0 % r.h.) which is ≥ 0.01 cm³/(m²·day), preferably ≥ 0.02 cm³/(m²·day) and particularly preferred ≥ 0.05 cm³/(m²·day) and/or ≤ 0.20 cm³/(m²·day), preferably ≤ 0.10 cm³/(m²·day) and particularly preferably ≤ 0.08 cm³/(m²·day) wherein the oxygen permeability is determined in accordance with ASTM D3985-24 (last updated 16^{th} July 2024) with an MOCON OX-TRAN-W device. In a preferred embodiment in which the base layer comprises no barrier layer, the composite material has an oxygen permeability (OTR, 23 °C/0 % r.h.) which is ≥ 10 cm³/(m²·day), preferably 40 cm³/(m²·day) and particularly preferred ≥ 70 cm³/(m²·day) and/or ≤ 200 cm³/(m²·day), preferably ≤ 150 cm³/(m²·day) and particularly preferably ≤ 100 cm³/(m²·day)

In a preferred embodiment in which the base layer comprises at least one barrier layer, the composite material has a water vapor transmission rate (WVTR, 38 °C/90% r.h.) which is ≥ 0.01 g/(m²·day), preferably ≥ 0.02 g/(m²·day) and particularly preferred ≥ 0.04 g/(m²·day) and/or ≤ 0.20 g/(m²·day) preferably ≤ 0.10 g/(m²·day) and particularly preferably ≤ 0.05 g/(m²·day), whereby the water vapor permeability is determined in accordance with ASTM F1249-25 (last updated 10^{th} November 2025) with a MOCON PERMATRAN-W. In a preferred embodiment in which the base layer comprises no barrier layer, the composite material has a water vapor transmission rate (WVTR, 38 °C/90% r.h.) which is ≥ 10 g/(m²·day), preferably ≥ 30 g/(m²·day) and particularly preferred ≥ 50 g/(m²·day) and/or ≤ 100 g/(m²·day) preferably ≤ 80 g/(m²·day) and particularly preferably ≤ 60 g/(m²·day),

Beside these mechanical properties and barrier properties the composite material according to the present invention shows enhanced sealing properties as evidenced by a lower sealing initiation temperature (SIT), by better hot tack properties, a higher achievable sealing strength under equivalent conditions (same value for the sealing strength can be achieved at lower temperatures), a broader sealing window and the possibility for sealing through contamination.

In a preferred embodiment the composite material is sealable against itself (third layer to third layer of the same piece of composite material or of two separate pieces of composite material) while an obtained seal seam strength is ≥ 10 N/15 mm upon sealing at 75 °C, preferably ≥ 15 N/15 mm upon sealing at 80 °C, preferably ≥ 20 N/15 mm upon sealing at 90 °C, preferably ≥ 25 N/15 mm upon sealing at 100 °C, preferably ≥ 30 N/15 mm upon sealing at 110 °C, ≥ 40 N/15 mm upon sealing at 120 °C and particularly preferably ≥ 45 N/15 mm upon sealing at 130 °C. Preferably the composite material shows a sealing window (in which a suitable sealing result could be achieved) of 80 to 130 °C. The upper limit of 130 °C is given due to the fact that the mono-material tends to shrink at higher temperatures resulting in a bad aspect of the sealing in the final packaging.

Such a wide sealing window offers advantages in practical application, in particular the advantage that a reliable sealing can still be achieved when using sealing devices that do not allow precise temperature control (e.g., set sealing temperature of 100 ± 20 °C in extreme cases). In contrast, with a narrower sealing window, for example between 110 and 130 °C for CPP films, problems with sealing are more likely to occur.

The values for the sealing seam strength refer to a sealing time of 0.2 sec and a sealing pressure of 3 bar using a Brugger HSG CC with two flat sealing jaws made of steel while the top jaw comprises a width of 10 mm being heated and the bottom jaws comprising a width of 10 mm being heated as well. The sealing seam strength is determined according to DIN 55529 (status 2012-09) using a tensile testing machine from Instron Model 3369.

The sealing initiation temperature (SIT) is defined as the lowest temperature, at which a certain measurable sealing strength can be obtained. The SIT is dependent on the sealing conditions, on the sealing device used for this purpose and on the sealing partner. Here as a reference the above-mentioned sealing device is used with a sealing time of 0.2 seconds and a sealing pressure of 3 bar, while the investigated samples are sealed against themselves (sealing layer to sealing layer). For a suitable comparability a threshold of 5 N/15 mm is used. Furthermore, a sealing seam strength of 20 N/15 mm has been proven in practice for a tight seal for the use of the composite material as packaging for food and/or pharmaceutical products and/or supplements and also for the other kind of products mentioned above, which is why also the temperature values are discussed at which a threshold of 20 N/15 mm could be achieved.

The composite material according to a preferred embodiment shows a sealing initiation temperature (SIT) which is ≤ 76 °C, preferably ≤ 74 °C and particularly preferably ≤ 72 °C, wherein a threshold of the obtainable sealing seam strength is set to 5 N/ 15mm upon sealing under the above-mentioned conditions (0.2 sec, 3 bar). Preferably a seal seam strength of 20 N/15 mm can be achieved upon a sealing temperature which is ≤ 90 °C, preferably ≤ 86 °C and particularly preferably ≤ 83 °C upon sealing under the above-mentioned conditions (0.2 sec, 3 bar).

In an advantageous embodiment the composite material comprises a sealing initiation temperature which is ≤ 76 °C preferably ≤ 74 °C and particularly preferably ≤ 72 °C with reference to sealing seam strength of 5 N/15 mm upon a sealing time of 0.2 sec and a sealing pressure of 3 bar. In comparison the sealing initiation temperature (SIT) of a related composite material comprising a CPP film as a sealing layer under equivalent conditions is between 90 and 95 °C and wherein for such a CPP comprising film a seal seam strength of 20 N/15 mm can be achieved upon sealing at temperatures between 110 and 115 °C.

The composite material according to a preferred embodiment of the present invention comprises enhanced hot tack properties especially in comparison to the typically used CPP films. Hot tack describes the ability of a freshly formed heat seal to withstand mechanical stress (e.g. tensile forces caused by filling) immediately after the sealing process - while still hot and before it has cooled completely - without tearing or opening. This property is crucial for high-speed packaging processes such as vertical form-fill-seal (VFFS), where heavy products collapse shortly after sealing and the seam must provide stability.

The hot tack properties can be quantified by a percentage value that describes the remaining portion of the seal (relative to the length of the seal) that remains after sealing at a specific temperature and after applying a specified force to open the seal directly after completion of the sealing process. The hot tack properties are determined in accordance with DIN 55571-1:2014-3. If not otherwise stated the values described in the following are referenced to a sealing time of 0.2 sec, a sealing pressure of 3 bar, a sample width of 15mm and a sample length of approximately 25 mm and teflonised 15mm x 10 mm hot tack testing jaws (heated on both sides). The determination of the hot tack properties was conducted using a Brugger HSG-CC device with hot tack analysis accessory.

For the investigation of the hot tack properties two stripes of the composite material to be sealed together (third layer facing third layer) are put together and placed in the device and are loaded with a falling weight (200 g used here) while being hold by hand. The strips are placed around the splitting mandrel (one strip at the top and one strip at the bottom) and over the deflection roller. The film is held in place on the splitting mandrel or deflection roller with a finger, and the weight is released above the drop funnel. At the control panel, the "seal status" is changed from 'locked' to "released" by pressing the green button. While doing so, one finger still holds the film on the splitting mandrel or the deflection roller. The slide is pushed to the right between the sealing jaws until it stops, automatically triggering the sealing process. After closing the sealing jaws, the finger is removed from the splitting mandrel/deflection roller so that the film, which was held in place until then, is held exclusively by the closed sealing jaws. Once the set sealing time has elapsed, the sealing jaws open and the still warm seal seam is pulled against the split mandrel by the attached weight. The film must be left on the splitting mandrel for approx. 30 seconds (= test time in the splitting mandrel). After that time the residual sealing seam is determined and a percentage in relation to the initial length of the sealing seam is determined.

The composite material according to an advantageous embodiment of the present invention comprises a residual seam which is ≥ 75 % at 80 °C (sealing temperature), preferred ≥ 90 % at 90 °C, preferred >_ 90 % at 100 °C, preferred ≥ 90 % at 110 °C, preferred ≥ 85 % at 120 °C and preferred ≥ 85 % at 130 °C. In comparison a related composite material including a CPP film as a sealing layer a residual seam strength under equivalent conditions is observed (no suitable sealing possible at 80, 90 and 100 °C) which is ≥ 45 % at 110 °C (sealing temperature), preferred ≥ 65 % at 120 °C and preferred ≥ 85 % at 130 °C.

The composite material according to an advantageous embodiment of the present invention comprises a hot tack residual seam which is ≥ 80 % for a sealing in the range between 80 and 130 °C referenced to a sealing time of 0.2 sec and a sealing pressure of 3 bar.

The use of a mixture of polyolefin-based resins as a sealing layer (third layer) offers the further advantage that a seal through contamination could be performed which is not possible for the comparative composite material including the CPP film as a sealing layer. The term seal through contamination describes the ability of a heat seal to form a tight and stable seal despite contamination such as product residues (e.g. powder, granulate, paste, oil, dust) in the sealing zone, without leaks or weakening.

In a preferred embodiment the composite material has a thickness which is ≥ 50 µm, preferably ≥ 70 µm and particularly preferably ≥ 90 µm and/or ≤ 150 µm, preferably ≤ 130 µm and particularly preferred ≤ 110 µm.

In the following some physical properties of a composite material according to a certain example of an embodiment of the present invention are discussed and compared to a related known material (reference sample). For a better comparison both composite materials used for the comparison comprise each a base layer in form of a metBOPP film (18 µm) which is laminated with another BOPP layer (first layer, 25 µm) by an adhesive layer (second layer, polyurethane-based adhesive, 2 g/m²). The reference sample contains a CPP film (50 µm) as a third layer and another adhesive layer (fourth layer, polyurethane-based adhesive, 2 g/m²). Such a composite material is for example known from the applicant and is sold under the product name "perpetua".

The certain exemplary embodiment of the present invention comprises an ethylene-propylene-copolymer (LT-resin as mentioned above) with an application weight of 32 g/m² as a fourth layer. The third layer is formed by a mixture of the same ethylene-propylene-copolymer in a portion of 92 wt.%, an anti-block agent containing polypropylene-based resin in a portion of 4 wt.% and a slip agent containing polypropylene-based resin in a portion of 4 wt.%, wherein the mixture is used with an application weight of 8 g/m².

The composite material according to the present invention offers in summary the following advantages, namely an enhanced tear ability in TD, an improved seal strength, better hot tack properties (lower SIT), a possibility to seal through contamination and the fulfillment of the requirements of the European Pharmacopoeia, while equivalent results regarding mechanical stability and barriers (OTR, WVTR) are obtained.

As mentioned above, the composite material according to the present invention comprises a tear resistance in transversal direction (TD) which is ≤ 2.0 N and a tear resistance in machine direction (MD) which is ≤ 2.0 N, wherein the tear resistance is determined according to DIN EN ISO 6383-1 (status 2016-05). For the above-mentioned exemplary composite material a tear resistance of 0.16±0.01 N in MD and a tear resistance of 0.21±0.01 N in TD was determined while the known reference composite material shows a tear resistance of 1.21±0.12 N in MD and a tear resistance of 5.68±0.14 N in TD. From these values it can be seen that the composite material according to the present invention could be torn easier in general and also more isotropically in MD and TD and therefore less direction dependent.

Furthermore, the composite material according to the present invention is more flexible in comparison to the composite material according to the prior art, while the mechanical stability remains unchanged. This mechanical behavior is evidenced by the Young Modulus and the puncture resistance.

For the exemplary embodiments of the composite material according to the invention a Young Modulus of 922±20 MPa in MD and a Young Modulus of 765±33 MPa in TD were determined. The Young Modulus (and elongation at break) can be determined according to ASTM D882-18 (last updated 15^{th} August 2018) using a dynamometer Instron 3369. In contrast to that the reference composite material shows a Young Modulus in MD which is 1395±54 MPa and in TD which is 1377±50 MPa. While the values for the Young Modulus are very different from each other, what means that the composite material according to the present invention is more flexible, the overall mechanical stability remains almost unchanged as evidenced by the maximum load, the elongation at break and the puncture resistance.

The composite material according to the exemplary embodiment shows a maximum load in MD of 99±3 N and in TD of 140±3 N, while the reference sample show a maximum load in MD of 103±1 N and in TD 148±7 N. The composite material according to the exemplary embodiment shows an elongation at break in MD of 94±6 % and in TD 66±5 % while the reference sample shows an elongation at break in MD of 67±3 % and in TD 63±10 %. The composite material according to the exemplary embodiment shows a puncture resistance from outside to inside of 15.3±0.5 N and from inside to outside of 15.7±0,5 N while the reference sample shows a puncture resistance from outside to inside of 15.8±0.5 N and from inside to outside of 14.8±1.1 N. The puncture resistance was determined according to ASTM F1306-21 (last updated 22^{nd} October 2025) with a dynamometer of Hounsfield H5KS. The data regarding the Young Modulus and the elongation at break were determined according to ASTM D882-18 (last updated 15^{th} August 2018) using a dynamometer Instron 3369.

The exemplary composite material shows an oxygen permeability (OTR, 23 °C/0 % r.h.) which is 0.056 cm³/(m²·day) and a water vapor transmission rate (WVTR, 38 °C/90% r.h.) which is 0.045 g/(m²·day), wherein the reference sample shows an oxygen permeability (OTR, 23 °C/0 % r.h.) which is 0.069 cm³/(m²·day) and a water vapor transmission rate (WVTR, 38 °C/90% r.h.) which is 0.102 g/(m²·day).

Beside these mechanical and barrier properties the composite material according to the present invention shows enhanced sealing properties as evidenced by a lower sealing initiation temperature (SIT), by better hot tack properties, a higher achievable sealing strength under equivalent conditions (same value for the sealing strength can be achieved at lower temperatures), a broader sealing window and the possibility for sealing through contamination.

The following details are referenced to a sealing to the samples themselves (CPP layer to CPP layer, and third layer to third layer) upon a sealing time of 0.2 sec and a sealing pressure of 3 bar. The remaining operative parameters are analog to mentioned above.

The exemplary composite material shows a seal seam strength which is 2 N/15 mm upon sealing at 70 °C, 18 N/15 mm upon sealing at 80 °C, 24 N/15 mm upon sealing at 90 °C, 28 N/15 mm upon sealing at 100 °C, 30 N/15 mm upon sealing at 110 °C, 40 N/15 mm upon sealing at 120 °C and 47 N/15 mm upon sealing at 130 °C and therefore a sealing window of 80 to 130 °C (threshold 20 N/15mm).

The reference composite material shows a seal seam strength which is 0.5 N/15 mm upon sealing at 80 °C, 1 N/15 mm upon sealing at 90 °C, 9 N/15 mm upon sealing at 100 °C, 18 N/15 mm upon sealing at 110 °C, 25 N/15 mm upon sealing at 120 °C and 27 N/15 mm upon sealing at 130 °C and therefore a sealing window of 110 to 130 °C (threshold 20/15mm).

The exemplary composite material shows sealing initiation temperature (SIT) of 72 °C, while the reference composite material shows sealing initiation temperature (SIT) of 94 °C (threshold 5 N/15mm). A seal seam strength of 20 N/15 mm can be obtained upon sealing at 83 °C for the exemplary composite material and upon sealing at 112 °C for the reference composite material.

The exemplary composite material comprises a residual seam (hot tack) which is 79 % at 80 °C, 94 % at 90 °C, 92 % at 100 °C, 92 % at 110 °C, 90 % at 120 °C and 86 % at 130 °C. The reference composite material comprises a residual seam (hot tack) which is 0 % at 80 °C, 0 % at 90 °C, 0 % at 100 °C, 46 % at 110 °C, 65 % at 120 °C and 88 % at 130 °C. From these values it can be clearly seen that not only the sealing window is significantly larger for the composite material according to the present invention but also the related hot tack properties are significantly enhanced.

The present invention is further directed to a packaging comprising a composite material according to a previously described embodiment. Preferably the packaging comprises at least one layer of the composite material as previously described. Hereby a single layer of the composite material can be sealed against itself to form the packaging, or two layers of the composite materials are sealed together to form the packaging.

Preferably the packaging is a packaging for food, pharmaceutical products, home and personal care products, supplements, gels, suspensions, toothpastes, liquids, beverages, consumer goods, nutrients, and the like. Preferably the packaging according to the present invention is a packaging for at least one the goods mentioned above. Particularly preferred the packaging is a packaging for food and/or pharmaceutical products and/or supplements.

In a preferred embodiment the packaging is a packaging selected from a group of packaging comprising stick packs, strip-packs, sachets, tubes, stand-up-pouches, pillow bags and flow-packs/over-wraps. It would be also possible to use the composite material according to an embodiment of the present invention as a lidding material for sealing a cup, tray or the like for taking up at least one of the above-mentioned products.

The present invention is further directed to a method for manufacturing a composite material for packaging, preferably according to a previously described embodiment. The method comprises in one step the provision of a base layer based on polyolefins, wherein the base layer comprises a first surface and a second surface, wherein the first surface and the second surface are opposite of each other. In another step a first layer based on polyolefins is provided. In another step the first layer is laminated with the base layer under application of a second layer preferably of lamination adhesive. Preferably the base layer and the first layer are laminated by wet lamination, dry-lamination or extrusion lamination, while the lamination adhesive (second layer) is chosen according to the related lamination process.

In another step of the method according to the invention a third layer is applied to the second surface of the base layer by extrusion and preferably by extrusion coating.

In a preferred embodiment (in which the composite material comprises a fourth layer) in another step of the method a fourth layer is applied to the second surface of the base layer by extrusion prior to applying of the third layer. In a preferred embodiment the third layer and the fourth layer are applied together and preferably by extrusion coating and particularly preferred by coextrusion.

Preferably the base layer is a base layer according to a previously described embodiment. Preferably the first layer is a first layer according to a previously described embodiment. Preferably the second layer is a second layer according to a previously described embodiment. Preferably the third layer is a third layer according to a previously described embodiment. Preferably the fourth layer is a fourth layer according to a previously described embodiment.

As mentioned above, the third layer and the fourth layer are applied by an extrusion process and preferably by extrusion coating. The third and fourth layer could be applied after each other (two separated extrusion coating steps) or could be applied in one single step. In a preferred embodiment the third layer and the fourth layer are applied by coextrusion.

In a preferred method a print layer is applied to the first layer, wherein the print layer is applied on a surface of the first layer facing the base layer (reverse print) or on a surface away from the base layer. Preferably the print layer is a print layer according to a previously described embodiment. Depending on which side of the first layer the print layer is to be applied, the print layer is applied before or after laminating the first layer to the base layer. In a preferred embodiment the print layer is applied to a surface of the first layer facing the base layer prior to laminating the first layer to the base layer. In another preferred embodiment of the present invention the print layer is applied on a surface away from the base layer, preferably after laminating the first layer to the base layer. In a preferred embodiment an overprint layer is applied to a surface of the print layer facing away from the base layer (surface print). Preferably the overprint layer is an overprint layer according to a previously described embodiment.

The present invention is further directed to a method for manufacturing a composite material for packaging, preferably according to a previously described embodiment. The method comprises in one step the provision of a base layer based on polyolefins, wherein the base layer comprises a first surface and a second surface, wherein the first surface and the second surface are opposite of each other. In another step a first layer based on polyolefins is provided. In another step the first layer is laminated with the base layer under application of a second layer preferably of lamination adhesive. Preferably the base layer and the first layer are laminated by wet lamination, dry-lamination or extrusion lamination, while the lamination adhesive is (second layer) is chosen according to the related lamination process.

In another step of the method according to the invention a fourth layer is applied to the second surface of the base layer by extrusion and preferably by extrusion coating. In another step of the method according to the invention a third layer is applied to the surface of the fourth layer facing away from the base layer by extrusion and preferably by extrusion coating.

In a preferred embodiment the fourth layer and the third layer are applied to together to the second surface of the base layer. Preferably the fourth layer and the third layer are applied by coextrusion the second surface of the base layer.

Preferably the base layer is a base layer according to a previously described embodiment. Preferably the first layer is a first layer according to a previously described embodiment. Preferably the second layer is a second layer according to a previously described embodiment. Preferably the third layer is a third layer according to a previously described embodiment. Preferably the fourth layer is a fourth layer according to a previously described embodiment.

The present invention is further directed to a method for manufacturing of a packaging, preferably according to a previously described embodiment. In a preferred method at least one layer of a composite material according to a previously described embodiment is used/provided. Preferably the composite material is sealed against itself while facing third layer to third layer. In another preferred embodiment two layers of a composite material according to a previously described embodiment are sealed with each other by facing a third layer of the first layer of composite material to the third layer of the second layer of the composite material.

The present invention is further directed to the use of a composite material according to previously described embodiment for a packaging and/or for packaging food and/or pharmaceutical products and/or for packaging of at least one of the above mentioned products.

Further advantages and embodiments are apparent from the accompanying drawings:
These show:
Fig. 1 a base layer according to a preferred embodiment;
Fig. 2 a composite material according to a preferred embodiment;
Fig. 3 a composite material according to a preferred embodiment;
Fig. 4 a composite material according to a preferred embodiment;
Fig. 5 a composite material according to a preferred embodiment;
Fig. 6 a composite material according to a preferred embodiment;
Fig. 7 a composite material according to a preferred embodiment;
Fig. 8 a composite material according to a preferred embodiment.

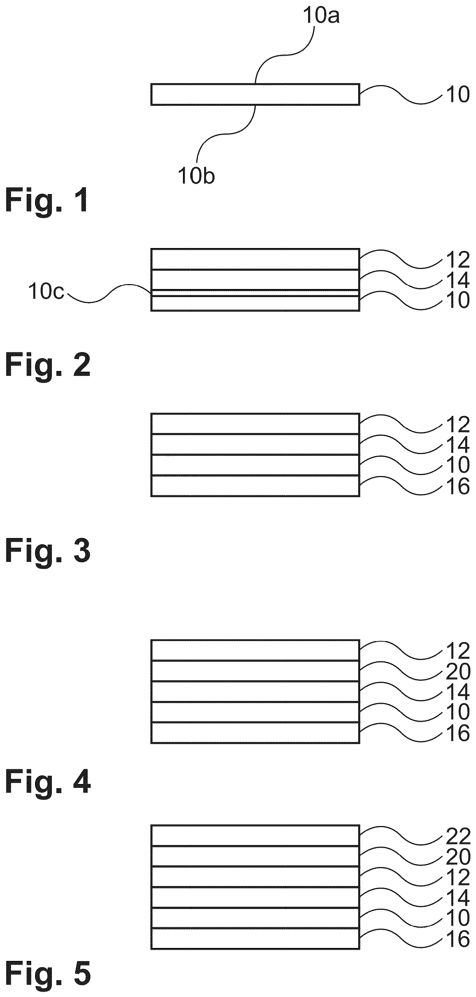

Figure 1 shows a schematic representation of a base layer 10. The base layer 10 is preferably a layer based on polyolefins. Preferably the base layer 10 is a BOPP film and in particular a metallized BOPP-film (metal layer not depicted). Reference sign 10a denotes the first surface of the base layer 10 and reference sign 10b denotes the second surface of the base layer 10. Preferably, the first surface 10a is the surface which, in a packaged state, faces away from the product to be packaged. Preferably, the second surface 10b is the surface of the base layer 10 that faces the product to be packaged when packaged.

Figure 2 shows a partial representation of a composite material according to a preferred embodiment of the present invention. The reference sign 12 denotes a first layer which is bound to the first surface of the base layer 10 by the second layer 14. Preferably the first layer 12 e.g. in form of a BOPP film is laminated with the base layer 10 by a lamination adhesive (second layer 14). As mentioned above the base layer 10 is preferably a BOPP film and particularly preferred a metallized BOPP film, wherein the metal layer 10c is preferably arranged on the first surface 10a of the base layer 10.

Figure 3 shows a representation of a composite material according to a preferred embodiment of the present invention. In comparison to figure 2 the additional third layer 16 is present which is arranged on a second surface of the base layer 10. Preferably the third layer 16 is an extrusion layer as described above.

The representation of a composite material according to a preferred embodiment of the present invention in figure 4 contains an additional print layer 20 in form of a reverse print. The depicted material shows the print layer 20 in form of a reverse print which is arranged on a surface of the first layer facing towards the base layer 10.

The representation of a composite material according to a preferred embodiment of the present invention in figure 5 contains the additional print layer 20 in form of a surface print which is arranged on a surface of the first layer facing away from the base layer 10. The reference sign 22 denotes an overprint layer which is arranged on a surface of the print layer 20 facing away from the base layer 10.

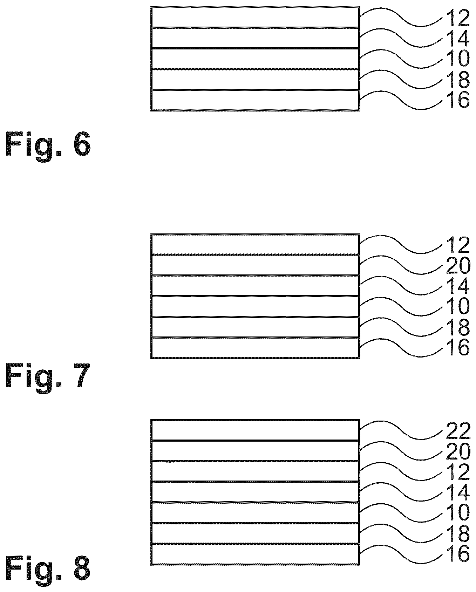

In the figures 6 to 8 representations of a composite material according to a preferred embodiment are depicted. These representations are related to the composite materials according to the figures 3 to 5 wherein the representations in the figures 6 to 8 contain an additional fourth layer 18, wherein the fourth layer 18 is arranged between the base layer 10 and the third layer 13. Preferably the fourth layer 18 is also a polyolefin-based layer and preferably a layer of a LT-resin or a layer of a HT-resin according to a previously described embodiment.

The applicant reserves the right to claim all features disclosed in the application documents as essential to the invention, provided that they are new in relation to the prior art, either individually or in combination. It should also be noted that the individual figures also describe features which may be advantageous in themselves. The skilled person will immediately recognize that a particular feature described in a figure may be advantageous even without adopting other features from that figure. Furthermore, the skilled person will recognize that advantages may also result from a combination of several features shown in individual or different figures.

It should also be noted that all features disclosed for the composite material and/or the packaging are also to be considered as disclosed for the method of manufacturing (such) a composite material or (such) packaging. Similarly, all features disclosed for a composite material are also to be considered as disclosed for a packaging comprising (such) a composite material. Furthermore, all features disclosed for the packaging that relate to the composite material shall also be deemed to be disclosed for the composite material independently of any packaging.

Conversely, all features disclosed for the respective method shall also be deemed to be disclosed for the composite material and/or the packaging, since the method can influence the respective properties of the composite material and/or packaging produced thereby.

### list of reference signs

- 10: base layer
- 10a: first surface of base layer
- 10b: second surface of base layer
- 10c: metal layer
- 12: first layer
- 14: second layer
- 16: third layer
- 18: fourth layer
- 20: print layer
- 22: overprint layer

## Claims

1. Composite material for packaging comprising a base layer (10) based on polyolefins, wherein the base layer (10) comprises a first surface (10a) and a second surface (10b), wherein the first surface (10a) and the second surface (10b) are opposite of each other, wherein the composite material comprises at least one first layer (12) based on polyolefins, wherein the first layer (12) is arranged at least indirectly on the first surface (10a) of the base layer (10), wherein the composite material comprises a second layer (14), wherein the second layer (14) is arranged between the base layer (10) and the first layer (12), wherein the composite material comprises a third layer (16) based on polyolefins, wherein the third layer (16) is arranged on the second surface (10b) of the base layer (10) at least indirectly,
**characterized in that**
the composite material comprises a tear resistance in transversal direction (TD) which is ≤ 2.0 N and a tear resistance in machine direction (MD) which is ≤ 2.0 N, wherein the tear resistance is determined according to DIN EN ISO 6383-1.

2. Composite material according to claim 1,
**characterized in that**
the tear resistance in transversal direction (TD) differs from the tear resistance in machine direction (MD) by ≤ 35 %, preferably by ≤ 30 % and particularly preferred by ≤ 25 %.

3. Composite material according to any of the preceding claims,
**characterized in that**
the composite material contains the polyolefin and in particular polypropylene with a content, which is ≥ 75 wt.%, preferably ≥ 90 wt.% and particularly preferred ≥ 95 wt.%.

4. Composite material according to any of the preceding claims,
**characterized in that**
the base layer (10) and/or the first layer (12) is an unstretched polypropylene film, a monoaxially stretched polypropylene film or a biaxially stretched polypropylene film.

5. Composite material according to claim 4,
**characterized in that**
the base layer (10) and/or the first layer (12) is a biaxially oriented polypropylene film.

6. Composite material according to any of the preceding claims,
**characterized in that**
the base layer (10) comprises at least one barrier layer, wherein the at least one barrier layer is a layer of a metal, a layer of a metal oxide, a layer of a semimetal oxide or a layer comprising polyvinyl alcohol or ethylene vinyl alcohol.

7. Composite material according to any of the preceding claims,
**characterized in that**
the second layer (14) is a lamination adhesive layer, wherein the lamination adhesive layer is selected from a group of adhesives used for wet lamination, dry lamination, extrusion lamination or combinations thereof.

8. Composite material according to any of the preceding claims,
**characterized in that**
the third layer (16) is a sealing layer, wherein the third layer (16) is an extrusion layer of a mixture of at least two polyolefin-based resins.

9. Composite material according to claim 8,
**characterized in that**
the third layer (16) comprises at least a first polyolefin-based resin, a second polyolefin-based resin and third polyolefin-based resin, wherein the first polyolefin-based resin is an ethylene-propylene-copolymer, wherein the second polyolefin-based resin is an anti-block agent containing polypropylene-based resin, wherein the third polyolefin-based resin is a slip agent containing polyethylene-based resin or a slip agent containing polypropylene-based resin.

10. Composite material according to any of the preceding claims,
**characterized in that**
the composite material comprises a fourth layer (18), wherein the fourth layer (18) is arranged between the base layer (10) and the third layer (16), wherein the fourth layer (18) is an extrusion layer of at least one fourth polyolefin-based resin.

11. Composite material according to claim 10,
**characterized in that**
the at least one fourth polyolefin-based resin is a polypropylene-based resin and preferably a resin based on a polypropylene-copolymer and particularly preferred based on an ethylene-propylene-copolymer.

12. Composite material according to any of the preceding claims,
**characterized in that**
the composite material comprises a sealing initiation temperature which is ≤ 76 °C preferably ≤ 74 °C and particularly preferably ≤ 72 °C with reference to a sealing seam strength of 5 N/15 mm upon a sealing time of 0.2 sec and a sealing pressure of 3 bar.

13. Composite material according to any of the preceding claims,
**characterized in that**
the composite material comprises a hot tack residual seam which is ≥ 80 % for a sealing in the range between 80 and 130 °C referenced to a sealing time of 0.2 sec and a sealing pressure of 3 bar.

14. Packaging comprising a composite material according to at least one of the preceding claims.

15. Method for manufacturing a composite material for packaging preferably according to one of the preceding claims 1 to 13 comprising the steps:
- Providing a base layer (10) based on polyolefins, wherein the base layer (10) comprises a first surface (10a) and a second surface (10b), wherein the first surface (10a) and the second surface (10b) are opposite of each other;
- Providing a first layer (12) based on polyolefins;
- Laminating the first layer (12) to the first surface (10a) of the base layer (10) under application of a second layer (14) preferably of a lamination adhesive;
- Applying a third layer (16) based on polyolefins to the second surface (10b) of the base layer (10) by extrusion.
